# EUROPEAN PATENT SPECIFICATION

(11) **EP 0 888 709 B1**
(45) Date of publication and mention of the grant of the patent: **20.03.2002**
(21) Application number: 98110542.2
(22) Date of filing: 09.06.1998
(51) Int. Cl.: A01G 25/16, F16K 31/08, F16K 31/385

(54) **Irrigation control unit with electronic programme selection and timing arrangement**
Bewässerungssteuereinheit mit elektronischer Programmauswahl und Zeitgebereinrichtung
Unité de commande d'irrigation avec sélection électronique de programme et dispositif de temporisation

(30) Priority: 04.07.1997 IT PN970040
(43) Date of publication of application: 07.01.1999
(73) Proprietor: UNIFLEX UTILTIME S.p.A., I-33086 Montereale Valcellina (Pordenone) (IT)
(72) Inventor: Morassutti, Giampaolo, 35122 Padova (IT); Fornasari, Paolo, 33084 Cordenons, Pordenone (IT)
(74) Representative: Giugni, Valter

(56) References cited:
- EP-A- 0 703 516
- EP-A- 0 717 220
- EP-A- 0 745 322
- FR-A- 2 544 961
- US-A- 5 169 117

## Description

The present invention refers to a central control unit of the type that is in a preferred manner used in connection with irrigation systems for watering at pre-detrmined or pre-set times one or more green spots, such as for instance flowerbeds, plants and the like, that may for instance be situated in the garden of a house and/or inside a dwelling. As used in connection with the following description of the invention, the term (pre-set) watering "times" shall be intended to mean both the time of the day or night and the day/days of the week or the month when each single watering operation is carried out, as well as the duration of the same watering operation.

A central control unit of the above cited kind comprises, in a housing usually made of plastic material, a water inlet and at least a water outlet, the flow of said water being controlled by an electromagnetic valve, or similar valve means, interlinked with an electronic control unit. The latter comprises a user interface, so that the user is able to pre-set the above cited "times" in accordance with his/her own particular needs and, of course, the particular requirements of the green spots to be watered.

Among the most recently published patent literature constituting the state of art in this particular field, following ones can be cited: EP-A-0 703 516, covering an irrigation control unit provided with a rotary selector switch that only enables pre-established watering programmes or sequences to be selected, and EP-A-0 745 322 referring to an electronic programme selection and timing switch that seems to be quite complicated in both its construction and operation.

The most important requirements that an irrigation control unit of the cited kind has to meet can be summarized as follows:
a) its functional component parts, both mechanical (hydraulic) and electric/electronic, shall be very reliable, since the control unit usually has to work unattended, ie. without any surveillance, in particular when it is installed ouside the house;
b) the programming interface shall be particularly simple and easy to use, the more so considering that a number of users actually lack a necessary extent of specific technical knowledge and abilities;
c) the connection of the control unit to the other parts of the irrigation system, in particular to the water supply faucet, shall be capable of being completed most quickly and easily even by users that have no particular bent for manual work.

As far as the requirement set forth under a) above is concerned, it should be noticed that water used to irrigate gardens and plants is generally known to quite frequently contain, include or be exposed to such impurities and foreign matters as grains of sand or earth, pebbles and the like, further to a relatively marked hardness due to the presence of insoluble salts, such as in particular calcium carbonate. In prior-art irrigation control units, although generally provided with filtering arrangements on the water inlet side thereof, this circumstance tends to give rise to faulty operation of the electromagnetic valve. Under particularly unfavourable conditions, such an electromagnetic valve can even jam or get stuck, under resulting serious damages for the green spots being watered under the control of the unit in the case of prolonged absence of the owner or user of the house owing , for instance, to summer holidays.

The general improvement in the convenience, ie. ease of use, of durable and semi-durable home products, ie. a drive that practically aims at coping with both requirements set forth under b) and c) above, is largely recognized conceptually; in practice, however, it is quite often underestimated or plainly disregarded in favour of other needs, such as for instance the reduction in the time required to develop a new product. It should on the other hand be recognized that such an improvement actually is a typical process of continuous improvement, that is a practically endless process, in which competition among the various manufacturers plays a decisive role.

It therefore is a main purpose of the present invention to provide an irrigation control unit of the afore cited kind which is capable of meeting all of the above indicated requirements and, of course, being also manufactured through the use of readily available techniques and materials at moderate costs.

According to the present invention, this and further aims are reached in an irrigation control unit having the features and characteristics as recited in the appended claims.

The invention will anyway be more readily and clearly understood in its characteristics and advantages from the description that is given below by way of non-limiting example with reference to the accompanying drawings, in which
- Figure 1 is a side view of an irrigation control unit according to the invention, with the cover thereof raised;
- Figure 2 is a front view of the control unit illustrated in Figure 1;
- Figure 3 is a cross-sectional view through the middle portion of the control unit illustrated in Figure 1 and Figure 2;
- Figure 4 is an inner view of the control unit illustrated in Figures 1, 2 and 3; and
- Figure 5 is a view of the control and monitoring panel of the electronic programme selection and timing arrangement of the control unit according to the present invention.

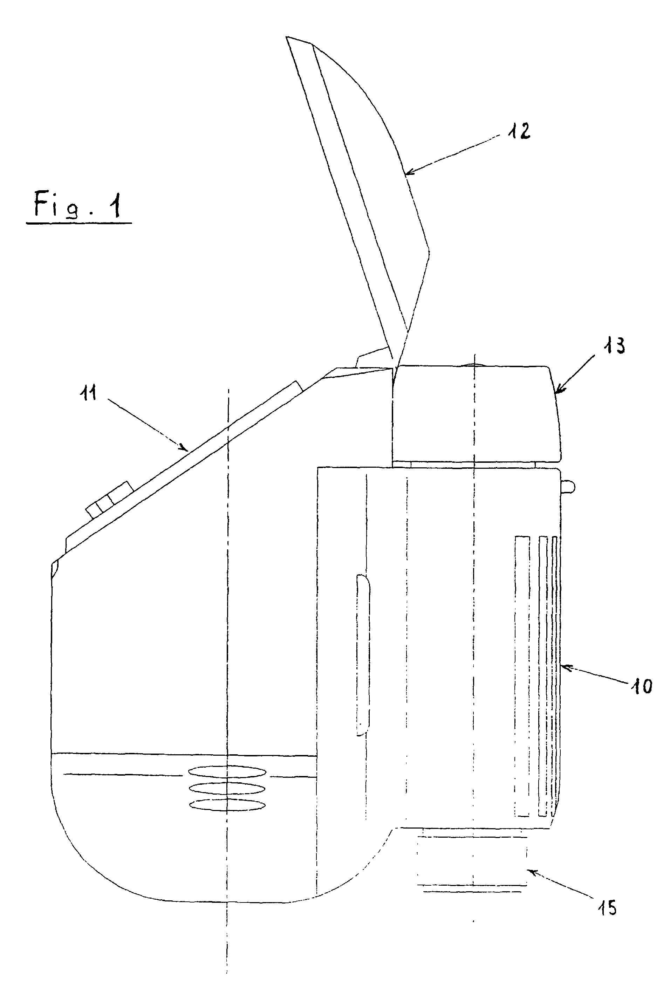

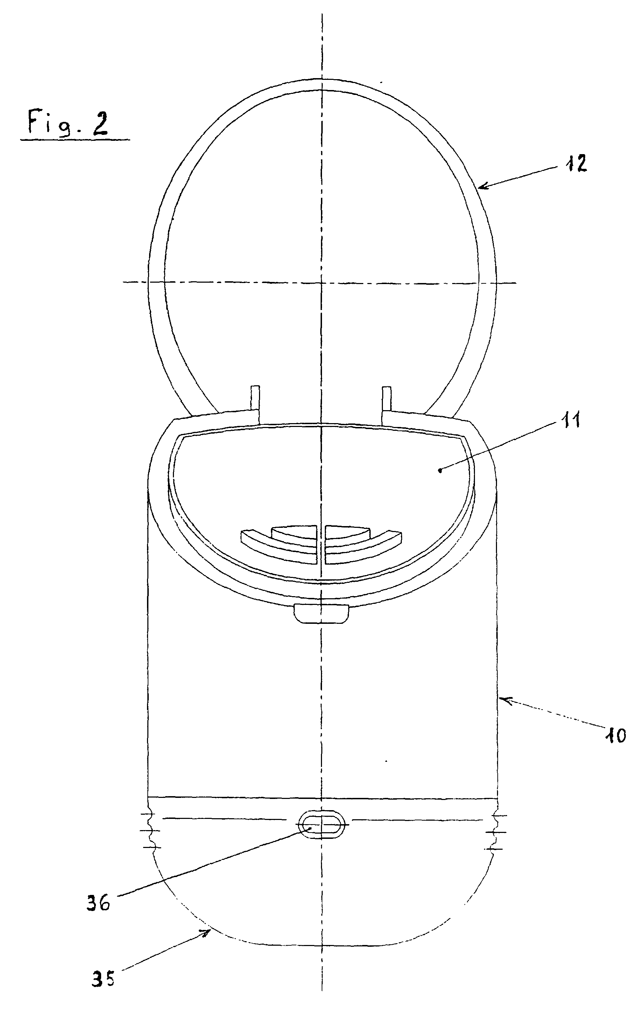

The irrigation control unit according to the present invention essentially comprises a box-like casing 10, which is intended to accomodate the water flow control means, and a programming arrangement 11, which is housed in the casing 10 and is capable of being shut towards the outside by means of a lid 12 (Figures 1 and 2).

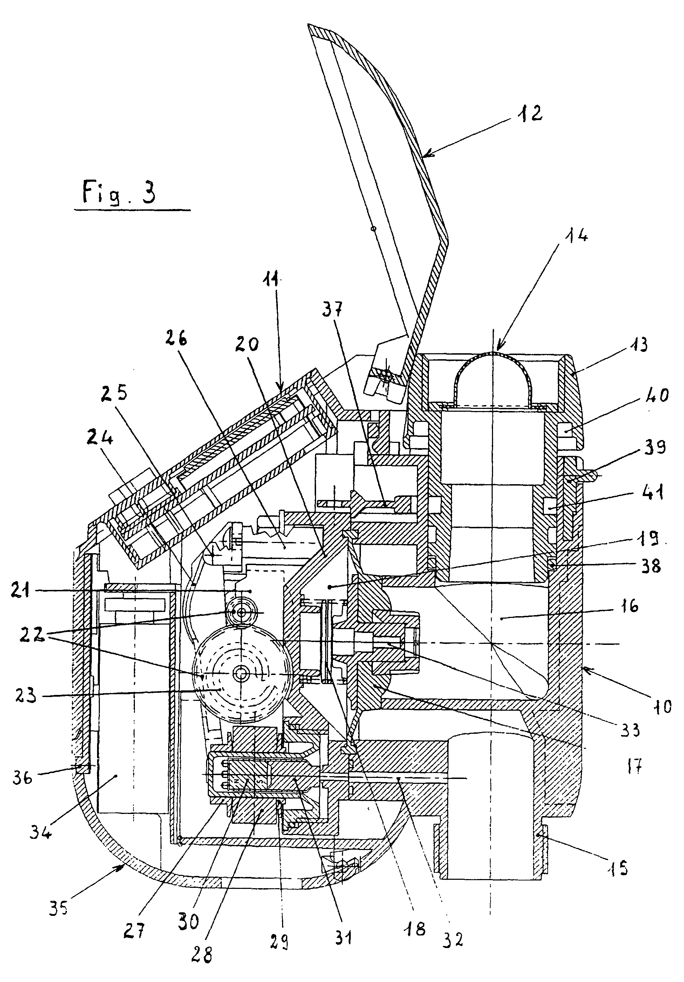

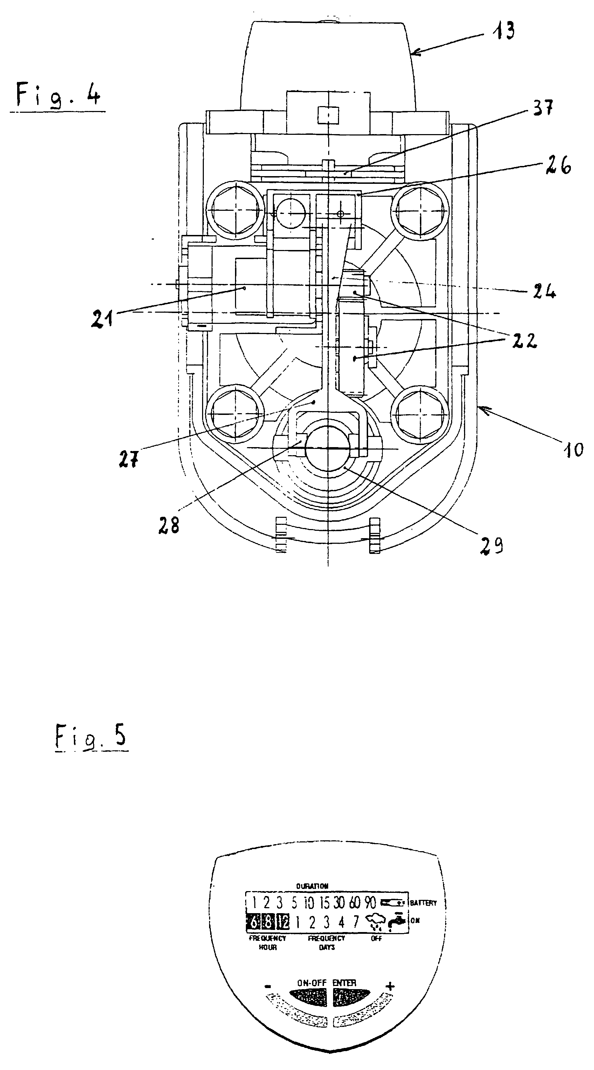

According to the invention, the casing 10 is provided (Figures 3 and 4) with a water inlet fitting ring nut 13, which may be possibly provided with inner filtering means 14, and a water outlet fitting 15, to which the watering hose (not shown) is connected or from which the watering hoses (not shown) branch out. The water inlet fitting 13 opens into an inner chamber 16, which communicates with the water outlet fitting 15 via a valve opening that is adapted to be closed by a diaphragm-type shutter 17. This diaphragm-type shutter 17 is biased into closing said valve opening by a spring 18 housed in a chamber 19 delimited by said diaphragm-type shutter 17 and a cover 20 that seals the body of the valve element, thereby tightening the diaphargm 17 along the edge thereof.

In the interior of the casing 10 there are mounted the actuation means of said valve element, which are fixed externally on to the body of said valve element. Such actuation means comprise a small electric motor 21 which, through a reduction gear 22 and a helical cam 23, actuates a lever 24 hinged with an end portion 25 thereof on a pin 26 that is integral with the valve body. At the other end portion thereof, said lever 24 terminates in a fork 27 supporting a magnet 28 in an articulated manner. This magnet 28 surrounds, at least partially, a cylindrical case 29 inside which a magnet 30, with a shutter 31 associated therewith, is able of sliding axially . Said case or sleeve 29 is tightly sealed on to the valve body and the shutter 31 co-operates with a calibrated opening 32 that can enable the chamber 19 to comunicate with the water outlet fitting 15 of the valve body. As this will be described in a more detailed manner below, the shutter 31 and the calibrated opening 32 form an auxiliary valve element adapted to create a pressure unbalance that, by acting on the main valve element formed by the diaphragm-type shutter 17, causes the latter to open and to close. To this purpose, also the diaphragm-type shutter 17 is provided with a calibrated axial opening 33 that keeps the chamber 16 constantly comunicating with the chamber 19.

The electronic programme selection and timing switch 11 and the actuating electric motor 21 are preferably supplied from a battery 34 housed in a compartment of the casing 10 that is closed by a lower cover 35 that can be opened by means of a push-button 36.

The operation of the valve assembly can be explained in a very simple manner. Usually the irrigation control unit is connected to a water supply and, under static conditions, ie. when said unit is not operating, the water fills both the chamber 16 and the chamber 19, since the opening 32 is shut by the shutter 31, while the opening 33 of the diaphragm 17 is freely open. When the timer switch 11 causes an irrigation cycle to be started, the actuation motor 21 is energized so that, via the reduction gear 22, the cam 23 and the lever 24, it causes the magnet 28 to be displaced axially. The latter carries with it, in the same direction (ie. leftwards in Figure 3), the magnet 30 along with the therewith associated shutter 31, thereby causing the opening 32 to be opened. As a result, the water contained in the chamber 19 starts to flow towards the outlet fitting 15, so that, owing to the pressure of the water in this way failing in the chamber 19, the diaphragm-type shutter 17 opens (by displacing leftwards in Figure 3) due to the action of the water pressure existing in the chamber 16, which overcomes the force exerted by the spring 18. The water flow therefore passes from the inlet fitting 13 to the outlet fitting 15 through the chamber 19, and the watering process starts.

At the end of the irrigation cycle, the timer switch 11 energizes again the actuation motor 21 that, by rotating in the opposite direction with respect to the previous one, causes the shutter 31 to displace in such a manner as to close the pressure unbalancing opening 32. As a result of such a closure, the chamber 19 fills up again with the water that flows in through the opening 33 of the diaphragm-type shutter 17. Owing to the fact that the surface of the diaphragm 17 on the side of the chamber 19 is considerably larger than the one on the side of the chamber 16, a water pressure difference is created between the chambers 19 and 16 with a pushing effect on the chamber 19, so that the diaphragm-type shutter 17 is forced to close the valve aperture through which the water flows from the chamber 16 to the outlet fitting 15. The irrigation process is thereby terminated.

According to a further feature of the invention, the ring nut of the water inlet fitting 13 of the control unit is mounted in a freely rotatable manner in a seat or recess 41 provided in the upper portion of the casing 10. The watertight sealing of the fitting 13 in said seat 41 is ensured by an O-ring gasket 38. A fork 37 keeps the fitting 13 in its seat by preventing it from sliding out axially. The fitting 13 is threaded internally so as to be capable of being screwed directly on to a water faucet. To this purpose, the rim of the fitting 13 is provided with an annular groove 40 that is adapted to be engaged by a sliding latch 39 connected to the casing 10 (Fig. 3). In order to attach the irrigation control unit to the water faucet (not shown), the ring nut 13 must first be partially screwed on to the faucet. Then the whole control unit, made integral with the ring nut 13 by virtue of the latch 39 engaging the groove 40, can be fully tightened by rotating it accordingly. For separating the control unit from the water supply faucet, the same above described steps must be carried out in the reverse sequence.

A further innovative feature of the control unit according to the invention is represented by the electronic programme selector and timer arrangement, which is of a very simple and rational type. As shown in Figure 5, the programme selector and timer arrangement 11 is provided with a control and surveillance panel that comprises four keys and a display. The keys are provided to control the opening and the closing of the auxiliary valve means (ON-OFF) of the control unit, to enable and start (ENTER) an irrigation programme cycle, and to count up (+) and cound down (-) the data to be entered in order to select a programme, respectively. The display shows at least the following data: the duration of the programme (DURATION), the hourly frequency (FREQUENCY HOUR) or the daily frequency (FREQUENCY DAYS), the battery charge state (BATTERY icon), the indication that the main valve means are opened (water faucet icon, ON), and the programme interruption indication (cloud-with-rain icon, OFF).

For the control unit to be switched on and a programme cycle to be set, the battery 34 must be connected, so that the digit 30 indicating the duration of the programme starts to flash. If such a duration is correct, it is confirmed by pushing the key ENTER, so that the illumination of said digit becomes steady. If on the contrary such a duration must be modified, either the count-up or the count-down key (ie. either + or -) is pushed accordingly so as to select the desired duration which is then set through the key ENTER. When the digit indicating the duration illuminates ina steady manner, ie. stops flashing, it is the digit 1 referring to the daily frequency that starts flashing. Even this setting can be either confirmed or modified by acting on the ENTER and/or the count-up and count-down (+ and -) accordingly, as described above. In this way, an appropriate hourly or daily frequency can be selected. Once the setting operation is completed, the so selected data keep shining with a steady light on the display. In addition, when the valve is open, there appears the water faucet icon. The programmed irrigation cycle will start after ten seconds and will be performed according to the indicated frequencies.

Programmes can also be set that involve a plurality of different cycles which will be carried out according to the sequence in which they are programmed. If a programme has to be for any reason interrupted as it is being carried out, all it takes to it is to press the ON-OFF key; the water faucet icon will disappear from the display, where the set data will however remain visible, while the programme itself will be resumed with the next cycle. If a set programme must be for any reason modified, all it takes to it is to press the ENTER key, thereby going back at the beginning of the programming procedure in which there will be only one cycle-duration digit flashing. At this point, the above illustrated procedure can be repeated so as to set a new programme.

Even when the irrigation control unit is operating, but the valve is closed, it is possible to draw off water for other uses than irrigation. To this purpose, the key ON-OFF must be pressed, thereby causing all set data to disappear from the display, whereas the water faucet icon keeps being visible to indicate that the valve has been opened manually. By pressing again on the key ON-OFF, the valve is caused to close again and the programme is reinstated; the latter will start again from the next cycle following the interrupted one.

It may prove necessary for a programme to be interrupted for an undetermined period of time, for instance in case of rain. To this purpose, all it takes is to press on the keys (+) and (-) at the same time: the set data will disappear from the display, while the cloud-with-rain icon will appear there. The programme can be reinstated by simply pressing again on the keys (+) and (-) at the same time.

Conclusively it can therefore be stated that the irrigation control unit according to the present invention enables all the desired aims to be effectively reached, while in particular proving very reliable in its operation, thanks to the particular type of valve and related actuation means used, as well as convenient in its use owing to the inherent simplicity of the electronic control apparatus adopted.

It will be appreciated that the above described irrigation control unit may be modified in a number oif ways in its constructional and functional parts without departing from the scope of the present invention as this is defined in the appended claims. For instance, the cam 23 provided between the lever 24 and the reduction gear 21, 22 can be replaced with any equivalent mechanical means, such as a spring. Furthermore, the electronic programme selector and timer can be arranged to be able to be set with different intervention times and may additionally be provided with or be able to perform automatic safety interventions against possible erroneous settings, irregular conditions and the like.

## Claims

1. Programmable irrigation control unit, in particular for home and similar uses, comprising in a single casing (10):
- water inlet means (13) and water outlet means (15) for the connection to a water supply conduit and the delivery of the water to an irrigation system, respectively;
- main valve means (17), preferably of the diaphragm type, to respectively establish and interrupt the flow of water between said water inlet and outlet means;
- auxialiary valve means (31) to respectively open and close at least an unbalancing opening (32) adapted to cause said main valve means to open and to close, respectively;
- user-programmable electronic means (11) adapted to control the operation of the irrigation control unit,
**characterized in that** said programmable electronic means (11) are adapted to control said auxiliary valve means (31) through a lever (24) actuated by an electric gearmotor (21, 22), said lever actuating said auxiliary valve means into displacing through the interaction of a first magnet (28) hinged on to the end portion of said lever (24) with a second magnet (30) associated to said auxiliary valve means (31).

2. Irrigation control unit according to claim 1, **characterized in that** said auxiliary valve means comprise a shutter (31) capable of sliding within a watertight sealed case (29) and adapted to open and close an opening (32) provided to unbalance the water pressure on the main valve means (17), said first magnet (28) surrounding externally, and at least partially, said case (29).

3. Irrigation control unit according to claim 1 or 2, **characterized in that** the lever (24) provided to actuate said auxiliary valve means is driven by said gearmotor (21, 22) through a helical cam (23).

4. Irrigation control unit according to any of the preceding claims, **characterized in that** the means provided to connect the control unit to the water supply conduit comprise a ring nut (13), attached in a freely rotatable manner on to the casing of the control unit, and a slidable latch (39) adapted to rigidly connect said ring nut to said casing when the control unit must be firmly locked on to the attachment fitting of the water supply conduit.

5. Irrigation control unit according to any of the preceding claims, **characterized in that** said programmable electronic means comprise a keyboard with four keys and a display.

6. Irrigation control unit according to claim 5, **characterized in that** the keys on said keyboardcommand the auxiliary valve means to open and close (ON-OFF), an irrigation programme to be started (ENTER), the programme data to be counted up (+) and counted down (-), respectively, whereas the display shows at least following information: the duration of the programme, the hourly frequency, the daily frequency, the battery charge condition, the indication that the main valve means are open and the indication that the programme has been interrupted.

## Patentansprüche

1. Programmierbare Bewässerungssteuereinheit, insbesondere für Haus- und ähnliche Verwendungen, aufweisend in einem einzelnen Gehäuse (10):
- eine Wassereinlasseinrichtung (13) und eine Wasserauslasseinrichtung (15) für die Verbindung mit einer Wasserversorgungsleitung und für die Zuführung des Wassers zu einem Bewässerungssystem jeweils;
- eine Hauptventileinrichtung (17), vorzugsweise des Diaphragma-Typs, um jeweils den Wasserfluss zwischen dem Wassereinlass und dem Wasserauslass einzurichten und zu unterbrechen;
- eine Hilfsventileinrichtung (31), um jeweils mindestens eine Unausgleichsöffnung (32) zu öffnen und zu schließen, die so angepasst ist, um zu bewirken, dass sich die Hauptventileinrichtung jeweils öffnet und schließt;
- eine durch den Benutzer programmierbare, elektronische Einrichtung (11), die so angepasst ist, um den Betrieb der Bewässerungssteuereinheit zu steuern,
**gekennzeichnet dadurch, dass** die programmierbare, elektronische Einrichtung (11) so angepasst ist, um die Hilfsventileinrichtung (31) über einen Hebel (24), betätigt durch einen elektrischen Getriebemotor (21, 22), zu steuern, wobei der Hebel die Hilfsventileinrichtung zu einer Verschiebung über die Wechselwirkung eines ersten Magnets (28), gelenkig angeordnet an dem Endbereich des Hebels (24), mit einem zweiten Magnet (30), zugeordnet der Hilfsventileinrichtung (31), verschiebt.

2. Bewässerungssteuereinheit nach Anspruch 1, **dadurch gekennzeichnet, dass** die Hilfsventileinrichtung eine Verschlusseinrichtung (31) aufweist, die für ein Gleiten innerhalb eines wasserdicht abgedichteten Gehäuses (29) geeignet ist, und so angepasst ist, um eine Öffnung (32) zu öffnen und zu schließen, vorgesehen so, um den Wasserdruck an der Hauptventileinrichtung (17) unausbalanciert zu gestalten, wobei der erste Magnet (28) extern und zumindest teilweise das Gehäuse (29) umgibt.

3. Bewässerungssteuereinheit nach Anspruch 1 oder 2, **dadurch gekennzeichnet, dass** der Hebel (24), vorgesehen, um die Hilfsventileinrichtung zu betätigen, durch den Getriebemotor (21, 22) über einen schraubenförmigen Nocken (23) angetrieben wird.

4. Bewässerungssteuereinheit nach einem der vorhergehenden Ansprüche, **dadurch gekennzeichnet, dass** die Einrichtung, vorgesehen dazu, die Steuereinheit mit der Wasserversorgungsleitung zu verbinden, eine Ringmutter (13), befestigt in einer frei drehbaren Art und Weise an dem Gehäuse der Steuereinheit, und eine gleitbare Verriegelung (39), die so angepasst ist, um fest die Ringmutter an dem Gehäuse zu verbinden, wenn die Steuereinheit fest an dem Befestigungsanschluss-Stück der Wasserversorgungsleitung verriegelt werden muss, aufweist.

5. Bewässerungssteuereinheit nach einem der vorhergehenden Ansprüche, **dadurch gekennzeichnet, dass** die programmierbare, elektronische Einrichtung ein Tastenfeld mit vier Tasten und einer Anzeige aufweist.

6. Bewässerungssteuereinheit nach Anspruch 5, **dadurch gekennzeichnet, dass** die Tasten auf dem Tastenfeld die Hilfsventileinrichtung befehligen, sich zu öffnen und zu schließen (ON-OFF), ein Bewässerungsprogramm zu starten (ENTER), die Programmdaten aufwärts (+) und abwärts (-) jeweils zu zählen, wogegen die Anzeige mindestens folgende Informationen darstellt: die Dauer des Programms, die stündliche Frequenz, die tägliche Häufigkeit, den Batterieladezustand, die Anzeige, dass die Hauptventileinrichtung offen ist, und die Anzeige, dass das Programm unterbrochen worden ist.

## Revendications

1. Unité de commande d'irrigation programmable, en particulier pour les utilisations domestiques et similaires, comprenant dans un unique boîtier (10) :
- des moyens d'alimentation en eau (13) et des moyens de délivrance d'eau (15) pour le raccordement à une conduite d'alimentation en eau et l'approvisionnement en eau d'un système d'irrigation, respectivement ;
- des moyens formant clapet principal (17), de préférence du type à diaphragme, pour établir et interrompre respectivement l'écoulement d'eau entre lesdits moyens d'arrivée et de délivrance d'eau ;
- des moyens formant clapet auxiliaire (31) pour ouvrir et fermer respectivement au moins une ouverture de divergence d'équilibre (32) adaptée pour entraîner lesdits moyens formant clapet principal à s'ouvrir et se fermer, respectivement ;
- des moyens électroniques programmables par un utilisateur (11) adaptés pour commander le fonctionnement de l'unité de commande d'irrigation, **caractérisée en ce que** lesdits moyens électroniques programmables (11) sont adaptés pour commander lesdits moyens formant clapet auxiliaire (31) grâce à un levier (24) actionné par un moteur à engrenage (21, 22), ledit levier actionnant lesdits moyens formant clapet auxiliaire en déplacement par l'interaction d'un premier aimant (28) axé sur la portion d'extrémité dudit levier (24) avec un deuxième aimant (30) associé auxdits moyens formant clapet auxiliaire (31).

2. Unité de commande d'irrigation selon la revendication 1, **caractérisée en ce que** lesdits moyens formant clapet auxiliaire comprennent un obturateur (31) capable de glisser à l'intérieur d'un boîtier étanche à l'eau (29) et adapté pour ouvrir et fermer une ouverture (32) prévue pour déséquilibrer la pression de l'eau sur les moyens formant clapet principal (17), ledit premier aimant (28) entourant extérieurement, et au moins partiellement, ledit boîtier (29).

3. Unité de commande d'irrigation selon la revendication 1 ou 2, **caractérisée en ce que** le levier (24) prévu pour actionner lesdits moyens formant clapet auxiliaire est entraîné par ledit moteur à engrenage (21, 22) au moyen d'une came hélicoïdale (23).

4. Unité de commande d'irrigation selon l'une quelconque des revendications précédentes, **caractérisée en ce que** les moyens prévus pour raccorder l'unité de commande au conduit d'alimentation en eau comprennent un écrou annulaire (13) fixé de manière à pouvoir tourner librement sur le boîtier de l'unité de commande, et un loquet pouvant glisser (39) adapté pour raccorder de façon rigide ledit écrou annulaire audit boîtier lorsque l'unité de commande doit être bloquée solidement sur le raccord de fixation de la conduite d'alimentation en eau.

5. Unité de commande d'irrigation selon l'une quelconque des revendications précédentes, **caractérisée en ce que** lesdits moyens électroniques programmables comprennent un clavier avec quatre touches et une unité d'affichage.

6. Unité de commande d'irrigation selon la revendication 5, **caractérisée en ce que** les touches sur ledit clavier commandent les moyens formant clapet auxiliaire pour ouvrir et fermer (MARCHE - ARRÊT), un programme d'irrigation, devant être démarré (ENTRER), les données de programme devant être comptées (+) et décomptées (-), respectivement, alors que l'unité d'affichage affiche au moins les informations suivantes : la durée du programme, la fréquence horaire, la fréquence quotidienne, la condition de charge de la batterie, l'indication que les moyens formant clapet principal sont ouverts et l'indication que le programme a été interrompu.
